# EUROPEAN PATENT APPLICATION

(11) **EP 1 973 109 A2**
(43) Date of publication of application: **24.09.2008**
(21) Application number: 08003844.1
(22) Date of filing: 29.02.2008
(51) Int. Cl.: G11B 7/135

(54) **Multivalued information reproducing method and multivalued information reproducing apparatus**

(30) Priority: 02.03.2007 JP 2007053059
(71) Applicant: Funai Electric Co., Ltd., Daito-shi, Osaka 574-0031 (JP)
(72) Inventor: Takeda, Toru, Daito-shi Osaka 574-0013 (JP); Shihara, Tetsuya, Daito-shi Osaka 574-0013 (JP)
(74) Representative: Beetz & Partner

(57) **Abstract**

A multivalued information reproducing apparatus includes: a light source which emits linear polarized light having a prescribed polarization direction; a first optical system which generates first linear polarized light and second linear polarized light that have different polarization directions using the linear polarized light which is emitted from the light source and makes the two polarized lights input to an optical recording medium in which the polarization directions of recording light are recorded as multivalued information; a second optical system which has a transmission light selecting element that selectively transmits emission light generated when the light passes the first optical system is input to the optical recording medium and by which the emission light that passes the transmission light selecting element is directed to a photo detecting portion in a state where first emission light that has a same polarization direction as the first linear polarized light and second emission light that has a same polarization direction as the second linear polarized light are separated; and a polarization direction judging portion which judges the polarization direction that is recorded in the optical recording medium based on amount of light of the first emission light and amount of light of the second emission light that are obtained by the photo detecting portion.

## Description

### BACKGROUND OF THE INVENTION

### Field of the Invention

The present invention relates to a method for reproducing multivalued information which is recorded in an optical recording medium, and to an apparatus for reproducing multivalued information which is recorded in an optical recording medium.

### Description of Related Art

Recently, demand for recording not only small capacity data such as text or image, but also large capacity data which is represented by moving picture information becomes increasingly strong. To respond the demand, great number of research and development have been performed about method for high density optical recording such as holographic recording and the like in a technical field of optical recording.

As a method to record information with high density utilizing an optical recording medium, there is technology to record multivalued information in the optical recording medium, one of them is disclosed, for example, in JF-A-2004-086948. In JP-A-2004-086948, an optical recording medium is introduced which can record the multivalued information using the dependence of polarization characteristic of information pit on depth of the information pit. Further, technology that reproduces the multivalued information by irradiating light which has a plurality of polarization states to the optical recording medium, is introduced.

However, the optical recording medium disclosed in JP-A-2004-086948 which is capable of recording the multivalued information, has a problem that it is difficult to perform recording of information utilizing an optical pickup device because it is structured to record the multivalued information by changing the depth of the pit.

### SUMMARY OF THE INVENTION

Because of this, inventors of the present invention now engage to develop an optical recording medium that can record the multivalued information and that is different from the optical recording medium disclosed in JP-A-2004-086948. That is, the inventors have been making a study about an optical recording medium which contains a fluorescent substance that is composed of, for example, cyanine based material, cumarin based material, anthracene based material, or the like in recording material.

A principle for recording and reproducing of the optical recording medium that is composed of these kinds of materials on which the inventors have been making a study, will be explained briefly. When polarized light is irradiated as recording light onto an optical recording medium, molecules of the fluorescent substance which have a same direction as a polarization direction of the recording light among the fluorescent substance contained in the recording material, reduce their fluorescence intensity by, for example, isomerization or the like and this makes the optical recording medium show anisotropy with respect to the fluorescence intensity.

If recording light which has a specific polarization direction is irradiated on an optical recording medium when recording is performed, and reproducing light (for example, circular polarized light) is irradiated on the optical recording medium when reproducing is performed, fluorescent light is generated. Therefore, if distribution of amount of light of the fluorescent light in each of a plurality of prescribed polarization direction is obtained, it becomes possible to read out the recorded polarization direction. That is, polarized light is used as the recording light, and the polarized light is irradiated onto the optical recording medium with changing the polarization direction in response to information to be recorded, thereby, the polarization direction can be recorded as the multivalued information on the optical recording medium. Further, if reproducing light is irradiated onto the optical recording medium when reproducing is performed, the amount of light is collected from the fluorescent light which is generated at the time for each of a plurality of prescribed polarization direction, the multivalued information that is recorded in the optical recording medium can be reproduced.

Further, this method in that the fluorescent substance is contained in the recording material, and recording and reproducing of the multivalued information is performed, can be thought a useful method because it has merit that sensitivity of the fluorescent light is large, the recording layer can be made thin, intensity of the reproducing light can be reduced, and the like. As a result, it is an object of the present invention to provide a multivalued information reproducing method and a multivalued information reproducing apparatus which make possible reproducing of the multivalued information for an optical recording medium in which the polarization direction of the recording light is recorded as the multivalued information and reproducing of the multivalued information is performed using emission light which is generated when the reproducing light is irradiated.

To attain the above described object, a multivalued information reproducing apparatus in accordance with the present invention includes: a light source which emits linear polarized light having a prescribed polarization direction; a first optical system which generates first linear polarized light and second linear polarized light that have different polarization directions using the linear polarized light which is emitted from the light source and makes the two polarized lights input to an optical recording medium in which the polarization directions of recording light are recorded as multivalued information; a second optical system which has a transmission light selecting element that selectively transmits emission light generated when the light passes the first optical system is input to the optical recording medium and by which the emission light that passes the transmission light selecting element is directed to a photo detecting portion in a state where first emission light that has a same polarization direction as the first linear polarized light and second emission light that has a same polarization direction as the second linear polarized light are separated; and a polarization direction judging portion which judges the polarization direction that is recorded in the optical recording medium based on amount of light of the first emission light and amount of light of the second emission light that are obtained by the photo detecting portion.

By this arrangement, two polarized lights which have different polarization directions are irradiated onto the optical recording medium as the reproducing light, amount of light is detected for each of two emission lights which are generated at the time and have different polarization directions, thereby, the polarization direction which is recorded in the optical recording medium is judged and reproducing of the multivalued information is performed. As a result, it is not necessary to arrange a polarization hologram element which separates the emission light that is generated from the optical recording medium into a plurality of polarized lights which have different polarization directions, and it becomes possible to provide the multivalued information reproducing apparatus which can reproduce the multivalued information without utilizing an expensive optical member.

In the present invention, the first optical system may make the first linear polarized light and the second linear polarized light input simultaneously to the optical recording medium in the multivalued information reproducing apparatus structured as above described.

By this arrangement, it becomes possible to structure the multivalued information reproducing apparatus with decreasing members which is necessary to control electrically as little as possible for an optical system that composes the multivalued information reproducing apparatus.

Further, in the present invention, the first optical system may include: a first light separating element which separates the linear polarized light that is emitted from the light source into two lights; a polarization direction converting element which is arranged so as to converts the polarization direction of at least one of the two lights that are separated by the first light separating element and to make one of the two lights be the first linear polarized light and the other of the two lights be the second linear polarized light; an optical axis aligning element which aligns the optical axes of the first linear polarized light and the second linear polarized light; and a light shielding element which is arranged in front of the optical axis aligning element to shield a part of the respective lights such that the first linear polarized light and the second linear polarized light are not superimposed when the optical axes of them are aligned in the multivalued information reproducing apparatus structured as above described.

By this arrangement, it is easy to realize the multivalued information reproducing apparatus which has a structure in that the members which is necessary to control electrically is decreased as little as possible.

In addition, in the present invention, the second optical system may include a second light separating element which separates the first emission light and the second emission light into different light paths, and the photo detecting portion may be composed of two photo detectors that are arranged in different positions in the multivalued information reproducing apparatus structured as above described.

By this arrangement, it becomes possible to structure the multivalued information reproducing apparatus with decreasing member which is necessary to control electrically as little as possible for the optical system that composes the multivalued information reproducing apparatus.

Still further, in the present invention, the second optical system may direct the first emission light and the second emission light to the photo detecting portion with a time interval in the multivalued information reproducing apparatus structured as above described.

By this arrangement, the apparatus has a structure in that the two emission lights which have different polarization directions are separated and directed to the photo detecting portion with a time interval. Therefore, it is not necessary to separate the emission light which has two polarization components that is generated from the optical recording medium in two directions in order to separate in every polarization direction. As a result, it becomes possible to reduce number of the photo detecting means that is included in the multivalued information reproducing apparatus to one, and it is possible to realize down sizing and low cost of the apparatus.

Further, in the present invention, the second optical system may include a liquid crystal element which contains a liquid crystal and two transparent electrodes to sandwich the liquid crystal, and a polarizing plate in the multivalued information reproducing apparatus structured as above described.

By this arrangement, it is easy to realize a structure in that the number of the photo detector which is included in the multivalued information reproducing apparatus is one because the apparatus has a structure in that the two emission light which have different polarization directions are separated with a time interval utilizing the liquid crystal element and the polarizing plate.

Still further, in the present invention, the first optical system may make the first linear polarized light and the second linear polarized light input to the optical recording medium with a time interval in the multivalued information reproducing apparatus structured as above described.

By this arrangement, size of the apparatus can be downscaled more than a structure in that the two polarized lights that have different polarization directions are generated after one light is separated into two directions because it has the structure in that the two polarized lights that have different polarization directions are obtained from the light source which emits the linear polarized light by generating the two polarized light with a time interval.

Further, in the present invention, the first optical system may include a liquid crystal element which contains a liquid crystal and two transparent electrodes to sandwich the liquid crystal in the multivalued information reproducing apparatus structured as above described.

By this arrangement, it is easy to realize the apparatus because it has a structure in that the liquid crystal element is utilized to obtain the two polarized lights that have different polarization directions from the light source which emits the linear polarized light with a time interval.

Still further, in the present invention, the first linear polarized light and the second linear polarized light may have the polarization directions that are orthogonal with each other in the multivalued information reproducing apparatus structured as above described.

By this arrangement, the two polarized lights that are generated in the first optical system and have different polarization directions are in relation which their polarization directions are orthogonal with each other. Because of this, the polarization direction which is recorded in the optical recording medium is easy to read out with high accuracy, and reliability of the apparatus can be improved.

In addition, to attain the above described object a method to reproduce an optical recording medium on which multivalued information is recorded in accordance with the present invention is characterized by including: a first step to irradiate simultaneously or with a time interval first linear polarized light and second linear polarized light which have different polarization directions on the optical recording medium in which the polarization directions of recording light are recorded as multivalued information; a second step to extract only emission light which is generated from the optical recording medium by the irradiation of the first step; a third step to direct the emission light that is extracted by the second step to a photo detecting portion in a state where first emission light that has a same polarization direction as the first linear polarized light and second emission light that has a same polarization direction as the second linear polarized light are separated; and a fourth step to judge the polarization direction that is recorded in the optical recording medium based on amount of light of the first emission light and amount of light of the second emission light that are obtained in the photo detecting portion by the third step.

By these arrangement, two polarized lights which have different polarization directions are irradiated onto the optical recording medium as the reproducing light, and amount of light is detected for each of two emission lights which are generated at the time and have different polarization directions, thereby, the polarization direction which is recorded in the optical recording medium is judged and reproducing of the multivalued information is performed. As a result, it is not necessary to arrange a polarization hologram element which separates the emission light that is generated from the optical recording medium into a plurality of polarized lights which have different polarization directions, and it becomes possible to perform reproducing of the multivalued information with low cost.

### BRIEF DESCRIPTION OF THE DRAWINGS

Fig.1 is a schematic cross sectional view to show one example of an optical recording medium to which a multivalued information reproducing method in accordance with the present invention is applied;
Fig. 2 is a graph to show a fluorescent spectrum which is obtained when S polarized light is irradiated as recording light onto an optical recording medium having a recording layer a cumarin based fluorescent substance is dispersed, then, linear polarized light is irradiated with changing polarization direction;
Fig. 3 is a schematic diagram to show a structure of a multivalued information reproducing apparatus according to first embodiment;
Fig. 4A is a diagram to explain a structure of a first light shielding member which is included in the multivalued information reproducing apparatus according to the first embodiment;
Fig. 4B is a diagram to explain a structure of a second light shielding member which is included in the multivalued information reproducing apparatus according to the first embodiment;
Fig. 4C is a diagram to show distribution of first linear polarized light and second linear polarized light in light which is output from a first polarization beam splitter in the multivalued information reproducing apparatus according to the first embodiment;
Fig. 5A is a diagram to show a modification example of the first light shielding member which is included in the multivalued information reproducing apparatus according to the first embodiment;
Fig. 5B is a diagram to show a modification example of the second light shielding member which is included in the multivalued information reproducing apparatus according to the first embodiment;
Fig. 5C is a diagram to show distribution of the first linear polarized light and the second linear polarized light in light which is output from the first polarization beam splitter in a case where the light shielding members shown in Fig. 5A and Fig. 5B are included in the multivalued information reproducing apparatus according to the first embodiment;
Fig. 6 is a schematic diagram to show a structure of a multivalued information reproducing apparatus according to second embodiment;
Fig. 7A is a schematic diagram to explain about a liquid crystal element and a polarizing plate which are included in a second optical system in the multivalued information reproducing apparatus according to the second embodiment;
Fig. 7B is a schematic diagram to explain about a liquid crystal element and a polarizing plate which are included in a second optical system in the multivalued information reproducing apparatus according to the second embodiment;
Fig. 8 is a schematic diagram to show a structure of a multivalued information reproducing apparatus according to third embodiment; and
Fig. 9 is a schematic diagram to show a modification example of the multivalued information reproducing apparatus in accordance with the present invention.

### DETAILED DESCRIPTION OF THE PREFERRED EMBODIMENTS

Hereinafter content of the present invention will be described in detail by way of embodiments with reference to drawings. However, these embodiments shown here are mere examples and the present invention is not limited to these embodiments.

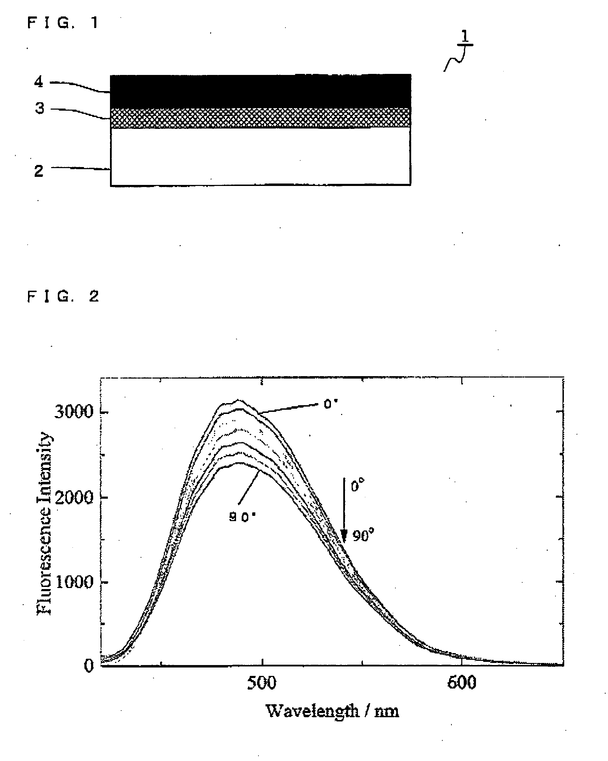

First, an optical recording medium to which a multivalued information reproducing method in accordance with the present invention is applied and outline of a method to reproduce the optical recording medium will be explained. Fig. 1 is a schematic cross sectional view to show a structure of an optical recording medium to which a multivalued information reproducing method in accordance with the present invention is applied. This optical recording medium 1 is formed by laminating a recording layer 3 and a protect layer 4 on a substrate 2.

The substrate 2 is a member to support the recording layer 3, it is made by, for example, glass or resin. The recording layer 3 is a layer to record a polarization direction of recording light (linear polarized light) which is input with changing the polarization direction in response to information to be recorded as multivalued information. The recording layer 3 is formed by dispersing a fluorescent substance that is composed of material such as, for example, cyanine based material, cumarin based material, anthracene based material, or the like in a polymer film which has as main component a polymer solid, for example, such as poly methyl methacrylate, polycarbonate, polyvinyl alcohol, and the like.

The protect layer 4 is made to prevent data lost by scratch or dust and it is set up to protect the recording layer 3. As a material to form the protect layer 4, for example, transparent resin such as polycarbonate or the like is used.

When linear polarized light which has a prescribed laser power as recording light is irradiated onto an optical recording medium 1 that is structured as above described, the optical recording medium 1 shows anisotropy with respect to fluorescence intensity. This is shown in Fig. 2. Fig. 2 is a graph to show a fluorescent spectrum which is obtained when S polarized light (polarization direction ninety (90) degrees) is irradiated as recording light onto the optical recording medium 1 having a recording layer 3 in which a cumarin based fluorescent substance is dispersed, then, linear polarized light is irradiated with changing polarization direction every fifteen (15) degrees between zero (0) degree and ninety (90) degrees.

As it can be understood from Fig. 2, when the S polarized light (polarization direction ninety (90) degrees) is used as the recording light, fluorescence intensity of respective polarization directions of the fluorescent spectrum which are obtained later, is the largest in the polarization direction zero (0) degree, and is the smallest in the polarization direction ninety (90) degrees. It is conceivable that this is because disappearance of transition dipole moment of the fluorescent substance having a direction corresponding to the polarization direction ninety (90) degrees when S polarized light is irradiated onto the recording layer 3 as recording light (though it is conceivable that molecular degradation, oxidization, or the like happens, fact is not clear.) happens, and change of space distribution of the transition dipole moment happens.

Further, though it is not shown, anisotropy of the fluorescence intensity becomes different depending on the polarization direction of the recording light. Therefore, if the polarization direction is recorded as the multivalued information on the optical recording medium 1 with changing the polarization direction of the recording light in response to information to be recorded, for example, when reproducing is performed, reproducing light of circular polarization is irradiated onto the optical recording medium 1 and the fluorescence intensity for fluorescent light that is generated at the time in each of a plurality of prescribed polarization direction is obtained, recorded polarization direction can be read out and it becomes possible to reproduce the multivalued information which is recorded in the optical recording medium 1. However in case where this method is employed, a polarization hologram element is required. Because the polarization hologram element is difficult to manufacture, it causes problems that procurement of it is difficult, and the like. As a result when the polarization hologram element is used, cost of the apparatus becomes high.

Then, as a result of investigation by inventors, it is found out that the polarization direction which is recorded in the optical recording medium 1 can be read out with high accuracy, in addition, the multivalued information reproducing apparatus can be manufactured at low cost by a method in that two linear polarized lights which have different polarization directions are irradiated as the reproducing lights to the optical recording medium 1 simultaneously or with a time interval, respective amount of light of two fluorescent lights which are generated at that time and have different polarization directions, are obtained, and the polarization direction that is recorded in the optical recording medium 1 is judged based on each of the obtained amount of light.

Hereinafter, a multivalued information reproducing apparatus to which the multivalued information reproducing method in accordance with the present invention is applied, will be explained by way of concrete embodiments shown below.

### [First Embodiment]

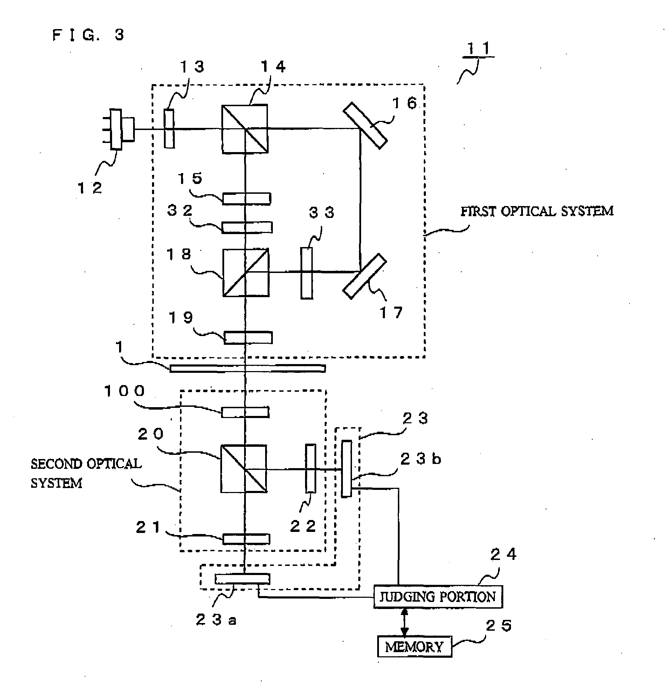

Fig. 3 is a schematic diagram to show a structure of a multivalued information reproducing apparatus 11 according to a first embodiment of the present invention. The multivalued information reproducing apparatus 11 is provided with a light source 12, a first optical system, a second optical system, a photo detecting portion 23, and a judging portion 24. The first optical system is composed of a collimator lens 13, a beam splitter 14, a half wavelength plate 15, a first reflecting mirror 16, a second reflecting mirror 17, a first light shielding member 32, a second light shielding member 33, a first polarization beam splitter 18, and an objective lens 19. The second optical system is composed of an optical filter 100, a second polarization beam splitter 20, a first condenser lens 21, and a second condenser lens 22.

The light source 12 is a semiconductor laser which emits linear polarized light as reproducing light. A polarization direction of the laser light which is emitted from the light source 12 is set in a prescribed direction (in this embodiment, a polarization direction zero (0) degree). At this point, wavelength of the laser light emitted from the light source 12 is selected properly depending on a material used in the recording layer 3 of the optical recording medium 1.

The linear polarized light for reproduction emitted from the light source 12 is converted into parallel ray by the collimator lens 13, and it is separated such that light amount ratio of reflected light and transmitted light becomes one to one (1:1) by the beam splitter (first light separating element) 14. The linear polarized light which is reflected by the beam splitter 14 is input to the half wavelength plate (polarization direction converting element) 15. Because the half wavelength plate 15 is arranged in a state where its optic axis is slanted in forty five (45) degrees with respect to the input light, the polarization direction of the light which is output from the half wavelength plate 15 is rotated ninety (90) degrees. That is, because the polarization direction of the reproducing light (linear polarized light) which is emitted from the light source 12 is zero (0) degree, the polarization direction of the linear polarized light which passes through the half wavelength plate 15 becomes ninety (90) degrees. Hereinafter, the linear polarized light which has the polarization direction of ninety (90) degrees is referred to as first linear polarized light for the sake of convenience.

On the other hand, because the linear polarized light which passes through the beam splitter 14 is merely reflected by the first reflecting mirror 16 and the second reflecting mirror 17, its polarization direction stays in constant and the polarization direction of it also stays in zero (0) degree. Hereinafter, the linear polarized light which has the polarization direction of zero (0) degree is referred to as second linear polarized light for the sake of convenience. At this point, the first linear polarized light and the second linear polarized light are in relation to be orthogonal with each other.

At this point in the present embodiment, only one of two lights which are separated by the beam splitter 14, is rotated its polarization direction utilizing the half wavelength plate 15, and by this arrangement the two lights which are separated by the beam splitter 14 are made have the relation in that the polarization direction of them are orthogonal with each other. However, the present invention is not limited to this embodiment, and it is no problem that both of two lights which are separated by the beam splitter 14, are rotated their polarization directions utilizing the half wavelength plate, and the two lights which are separated by the beam splitter 14 are made have relation in that the polarization direction of them are orthogonal with each other. Further, as for a way to rotate the polarization direction, the present invention is not always intended to be limited to the way utilizing the half wavelength plate, and it is no problem of course that the rotation is performed utilizing other polarization rotating element or the like.

The first polarization beam splitter 18 is formed such that the first linear polarized light passes through it and the second linear polarized light is reflected by it. Then the first linear polarized light and the second linear polarized light are made have the same optical axes by the first polarization beam splitter 18. That is, the first polarization beam splitter 18 functions as an optical axis aligning means which aligns the optical axes of the first linear polarized light and the second linear polarized light.

At this point, the first linear polarized light and the second linear polarized light pass respectively the first light shielding member 32 or the second light shielding member 33 as it will be described later. The term "optical axis aligning" used here means that the optical axes of them become the same under an assumption that there are no these two light shielding members 32, 33.

The first light shielding member (light shielding element) 32 is arranged between the half wavelength plate 15 and the first polarization beam splitter 18, and the second light shielding member (light shielding element) 33 is arranged between the second reflecting mirror 17 and the first polarization beam splitter 18. Hereinafter the two light shielding members 32, 33 will be explained.

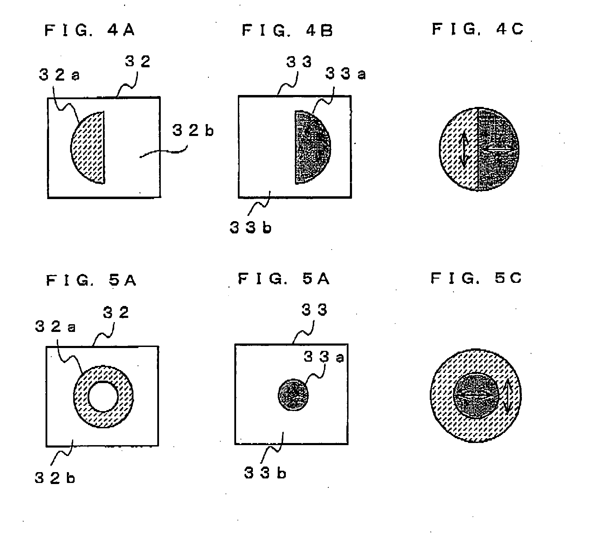

Fig. 4A - Fig. 4C are schematic diagrams to explain the first light shielding member 32 and the second light shielding member 33. Fig. 4A is a diagram to explain a structure of the first light shielding member 32, Fig. 4B is a diagram to explain a structure of the second light shielding member 33, and Fig. 4C is a diagram to show distribution of the first linear polarized light and the second linear polarized light in light which is output from the first polarization beam splitter 18.

As shown in Fig. 4A, the first light shielding member 32 has two areas of a first area 32a and a second area 32b. The first area 32a is an area through which the first linear polarized light passes and this area is formed to be a half circle shape. On the other hand the second area 32b is an area through which the first linear polarized light does not pass and this area is formed to surround the first area 32a. That is, the first light shielding member 32 does not shield all the first linear polarized light which is input to it, and it is made shield only a part of the first linear polarized light.

The first light shielding member 32 which is structured as above can be manufactured by, for example, combining two polarizing plates with their polarizing directions changed in the first area 32a and the second area 32b. Or it can be manufactured by sticking light shielding film or the like at a part to be shielded on glass plate.

As shown in Fig. 4B, the second light shielding member 33 has two areas of a first area 33a and a second area 33b. The first area 33a is an area through which the second linear polarized light passes and this area is formed to be a half circle shape that is inverse of the first area 32a of the first light shielding member 32. On the other hand the second area 33b is an area through which the second linear polarized light does not pass and this area is formed to surround the first area 33a. That is, the second light shielding member 33 does not shield all the second linear polarized light which is input to it, and it is made shield only a part of the second linear polarized light.

Further, the first light shielding member 32 and the second light shielding member 33 are adjusted and arranged such that the first linear polarized light and the second linear polarized light become lights which have distribution of the polarized light as shown in Fig. 4C when they pass the first polarization beam splitter 18. By this arrangement, the light (reproducing light) which is output from the first polarization beam splitter 18, can be light including the two polarized lights that have different polarization directions.

At this point, shapes of the parts which are shielded by the first light shielding member 32 and the second light shielding member 33 are not limited to a structure shown in Fig. 4A - Fig. 4C, and various modifications can be introduced within a range which does not depart from the object of the present invention. That is, it is possible to form them as a structure shown in Fig. 5A- Fig. 5C, for example. Fig. 5A - Fig. 5C are schematic diagrams to show a modification example of the first light shielding member 32 and the second light shielding member 33. Fig. 5A is a diagram to show the modification example of the first light shielding member 32, Fig. 5B is a diagram to show the modification example of the second light shielding member 33, and Fig. 5C is a diagram to show distribution of the first linear polarized light and the second linear polarized light in light which is output from the first polarization beam splitter 18 in case where the shielding members shown in Fig. 5A and Fig. 5B are utilized.

The first linear polarized light and the second linear polarized light which are output from the first polarization beam splitter 18 are condensed on a recording layer 3 of the optical recording medium 1 (See, Fig. 1) by the objective lens 19.

When the first linear polarized light and the second linear polarized light are input to the optical recording medium 1, fluorescent light is generated. This fluorescent light is composed of a first fluorescent light that is generated when the first linear polarized light is input to the optical recording medium 1 and a second fluorescent light that is generated when the second linear polarized light is input to the optical recording medium 1. The polarization direction of the first fluorescent light is the same direction as the first linear polarized light and the polarization direction of the second fluorescent light is the same direction as the second linear polarized light. Further, the first linear polarized light and the second linear polarized light are different ninety (90) degrees in their polarization directions and the first fluorescent light which is generated by irradiation of the first linear polarized light and the second fluorescent light which is generated by irradiation of the second linear polarized light show different intensity characteristic depending on the polarization direction which is recorded in the optical recording medium 1.

At this point, the first linear polarized light and the second linear polarized light which are input to the optical recording medium 1 pass through the optical recording medium 1.

The optical filter 100 is an optical member (transmission light selecting element) which has selectivity for wavelength of the transmission light. In light which is output from the optical recording medium 1, the reproducing light (the first linear polarized light and the second linear polarized light) is included in addition to the fluorescent light (the first fluorescent light and the second fluorescent light). Among them, it is only the fluorescent light that is necessary to reproduce the multivalued information in this embodiment. The fluorescent light which is generated when the reproducing light is irradiated onto the optical recording medium 1, has longer wavelength than the reproducing light. As a result, the optical filter 100 has the wavelength selectivity and it is structured such that it passes the fluorescent light and it does not pass the reproducing light

The second polarization beam splitter (second light separating element) 20 is formed to transmit the first fluorescent light and to reflect the second fluorescent light between the fluorescent lights which are generated when the reproducing light is irradiated onto the optical recording medium 1. The first fluorescent light which passes through the second polarization beam splitter 20 is received by the first photo detector 23a which composes the photo detecting portion 23. On the other hand the second fluorescent light which is reflected by the second polarization beam splitter 20 is received by the second photo detector 23b which composes the photo detecting portion 23. The first photo detector 23a and the second photo detector 23b convert the received light information into electric signal.

The amount of light of the first fluorescent light which is received by the first photo detector 23a and the amount of light of the second fluorescent light which is received by the second photo detector 23b are output to the judging portion 24 which is composed of, for example, a micro processor or the like in a form of electric signal. From the obtained amount of light of the first fluorescent light and the amount of light of the second fluorescent light, the judging portion 24 obtains difference value of them or ratio of them. Then, the judging portion 24 judges which direction the polarization direction that is recorded in the optical recording medium 1 shows based on information which is stored in advance in a memory 25 that is connected to the judging portion 24.

At this point, the information stored in advance in the above described memory 25 is information which is obtained, for example, as below. First, a reference optical recording medium is prepared on which a plurality of prescribed polarization directions are recorded. Then, reproducing light is irradiated on the reference optical recording medium utilizing the multivalued information reproducing apparatus 11, and fluorescence intensity (amount of light of the fluorescent light) of the first fluorescent light and the second fluorescent light are measured. The difference value or ratio is searched for the obtained fluorescence intensity of the first fluorescent light and the second fluorescent light. Relation between the obtained difference value or ratio and the polarization direction which is known in advance is plotted, then the relational expression (for example, a relational expression which shows straight line relationship can be obtained) between the polarization direction and the difference value (or ratio) is searched. Then, the resulted relational expression is stored in the memory 25. By these steps, the polarization direction which is recorded in the optical recording medium 1 can be measured by the judging portion 24 from the fluorescence intensity of the first fluorescent light and the fluorescence intensity of the second fluorescent light that are obtained.

At this point in the present embodiment, a structure is employed in that ratio of amounts of two lights which are separated by the beam splitter 14 becomes one to one, and the first linear polarized light and the second linear polarized light lose their half of amount of light respectively by the first light shielding member 32 and the second light shielding member 33. However, the present invention is not intended to be limited to this embodiment, and they may be appropriately changed.

Further in the present embodiment, the first linear polarized light is defined as the polarization direction ninety (90) degrees, and the second linear polarized light is defined as the polarization direction zero (0) degree. However, the present invention is not intended to be limited to this embodiment. It is no problem a structure is employed in that the first linear polarized light and the second linear polarized light have relation which they have different polarization directions and are orthogonal with each other. Further, a structure can be employed in that the first linear polarized light and the second linear polarized light that have different polarization directions, have relation which their polarization directions are not orthogonal with each other.

By structuring the multivalued information reproducing apparatus 11 as above described, the optical recording medium 1 on which the polarization direction of the recording light is recorded as the multivalued information and from which reproducing of the multivalued information is performed utilizing the fluorescent light that is generated when the reproducing light is irradiated, can be reproduced with high accuracy. Further, it is easy to manufacture the multivalued information reproducing apparatus because it is not necessary to utilize especially the optical parts and the like that require high cost to manufacture.

### [Second Embodiment]

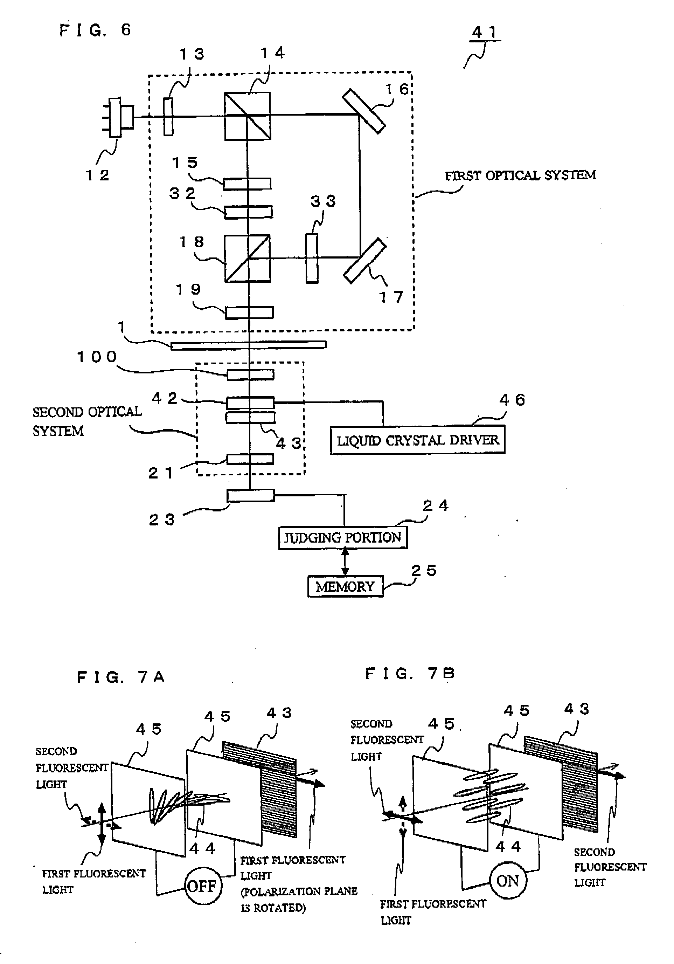

Next, a multivalued information reproducing apparatus according to a second embodiment will be explained. For the sake of convenience, the same parts of the multivalued information reproducing apparatus as the apparatus 11 of the first embodiment, will be given the same reference numerals and explanation for them will be omitted when it is not necessary particularly. Fig. 6 is a schematic diagram to show a structure of the multivalued information reproducing apparatus 41, according to second embodiment.

The multivalued information reproducing apparatus 41 according to the second embodiment has the same structure in the first optical system as the multivalued information reproducing apparatus 11 according to the first embodiment, however, it has different structure in the second optical system. By this difference in the second optical system, the multivalued information reproducing apparatus 41 according to the second embodiment is different from that of the first embodiment even in a point that number of the photo detector (reference numeral 23 is given in this embodiment) of the photo detecting portion 23 is only one.

The second optical system of the multivalued information reproducing apparatus 41 is composed of an optical filter 100, a liquid crystal element 42, a polarizing plate 43, and a condenser lens 21. Fig. 7A and Fig. 7B are schematic diagrams to explain about the liquid crystal element 42 and the polarizing plate 43 which are included in the second optical system. As shown in Fig. 7A and Fig. 7B, the liquid crystal element 42 has a liquid crystal 44 and two transparent electrodes 45 to sandwich the liquid crystal 44. The liquid crystal 44 which is included in the liquid crystal element 42 is in a state that orientation direction of molecule is twisted in ninety (90) degrees between an input side (left side of Fig. 7A) and an output side (right side of Fig. 7A) of the light by an orientation film which is not shown (TN type liquid crystal). The transparent electrodes 45 are electrically connected to a liquid crystal driver 46 (See, Fig. 6), and they are controlled ON and OFF by the liquid crystal driver 46.

When voltage is not applied on the transparent electrodes 45 (a state where the liquid crystal element 42 is OFF in Fig. 7A), the orientation direction of the liquid crystal 44 is in the state twisted in ninety (90) degrees between the input side and the output side as above described. Because of this, the first fluorescent light which passes through the optical filter 100 is rotated its polarization direction in ninety (90) degrees by optical rotatory power of the liquid crystal 44. At this point, the polarizing plate 43 is structured such that it transmits light which is parallel to the polarization direction of the second fluorescent light before it is input to the liquid crystal element 42, and it does not transmit other lights. As a result, the first fluorescent light whose polarization direction is rotated in ninety (90) degree, can pass through the polarizing plate 43. However, the second fluorescent light which passes through the optical filter 100 cannot pass the polarizing plate 43 because it is shielded by the liquid crystal element 42.

On the other hand, when voltage is applied to the transparent electrodes 45 (a state where the liquid crystal element 42 is ON in Fig. 7B), the orientation direction of the liquid crystal 44 is changed to a direction which is parallel to traveling direction of the light. Because of this, both of the first fluorescent light and the second fluorescent light which pass through the optical filter 100, can pass the liquid crystal element 42 and can be input to the polarizing plate 43. The polarizing plate 43 makes only the second fluorescent light pass because it is structured such that it transmit light which is parallel to the polarization direction of the second fluorescent light, and it does not transmit other lights.

As above described, by controlling the liquid crystal element 42 in ON and OFF, it is possible to direct only one of the first fluorescent light and the second fluorescent light which pass through the optical filter 100 to the photo detector 23 via the condenser lens 21. As a result, it becomes possible to obtain amount of light of the first fluorescent light and the second fluorescent light by the photo detector 23 in a separated state by performing ON or OFF of the liquid crystal element 42 at a prescribed timing when reading of the polarization direction which is recorded as the multivalued information is performed.

Because of this, amount of light of the first fluorescent light and the second fluorescent light are obtained respectively by the photo detector 23 about the cases where the liquid crystal element 42 which are controlled in ON and OFF in the prescribed timing, are ON and OFF, and the judging portion 24 performs calculating process using the respective amount of light which are obtained for the respective fluorescent lights by the same manner as the first embodiment, then it becomes possible to perform judgment of the polarization direction which is recorded in the optical recording medium 1. By these steps, reproducing of the optical recording medium 1 on which the polarization direction is recorded as the multivalued information becomes possible.

At this point, in a state where the voltage which is applied to the liquid crystal element 42 is OFF (a state shown in Fig. 7A), a part of the second fluorescent light may pass through the liquid crystal element 42 and the polarizing plate 43. In such case, amount of light of the first fluorescent light increases much more than actual value. To consider this point, it is preferable that a rate which the second fluorescent light passes the liquid crystal element 42 and the polarizing plate 43 when the liquid crystal element 42 is in OFF state, is measured in advance, and amount of light of the first fluorescent light is corrected using the rate. That is, it is no problem that amount of light which is obtained much more than the actual value by interfusion of the second fluorescent light to the first fluorescent light, is calculated from the amount of light of the second fluorescent light when the liquid crystal element 42 which is utilized for the above described calculation process is ON, and the above described rate which is obtained by measurement in advance, then, the increased amount of light is subtracted from the obtained amount of light by the photo detector 23 to calculate the amount of light of the first fluorescent light.

Further in the present embodiment, a structure is employed in that the first fluorescent light and the second fluorescent light are measured alternatively on the photo detector 23 by arranging the liquid crystal element 42 and the polarizing plate 43 in the second optical system. However, the present invention is not limited to the structure and various modifications can be introduced within a range that does not depart from the object of the present invention. That is, it is no problem that any structure can be employed as far as the structure can (alternatively) obtain the first fluorescent light and the second fluorescent light with a time interval, and, for example, a structure can be employed in that a light-space modulator or the like is utilized.

### [Third Embodiment]

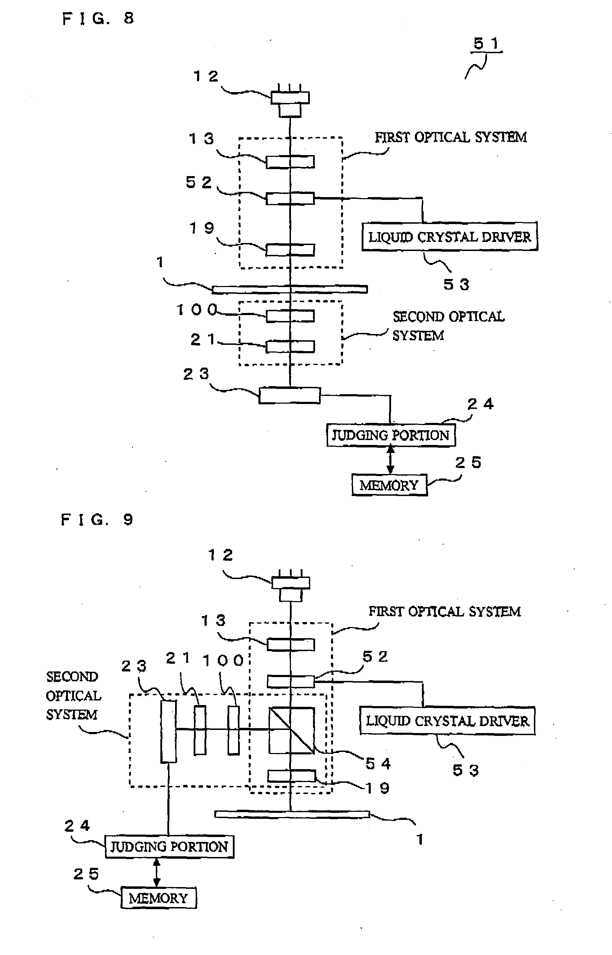

Next, a multivalued information reproducing apparatus according to a third embodiment will be explained. For the sake of convenience, the same parts of the multivalued information reproducing apparatus as those of the multivalued information reproducing apparatus 11 in the first embodiment will be given the same reference numerals and explanation for them will be omitted when it is not necessary particularly. Fig. 8 is a schematic diagram to show a structure of a multivalued information reproducing apparatus 51 according to the third embodiment.

The multivalued information reproducing apparatus 51 according to the third embodiment is provided with a light source 12, a first optical system, a second optical system, a photo detector 23, and a judging portion 24. The first optical system is composed of a collimator lens 13, a liquid crystal element 52, and an objective lens 19. The second optical system is composed of an optical filter 100 and a condenser lens 21. The liquid crystal element 52 has a similar structure as the liquid crystal element 42 of the second embodiment shown in Fig. 7A and Fig. 7B. However, the liquid crystal element 52 is arranged in the first optical system in a state where the liquid crystal element 42 in the second embodiment is rotated ninety (90) degree. Further, the liquid crystal element 52 is electrically connected with the liquid crystal driver 53 so as to be controlled in ON and OFF.

The linear polarized light with the polarization direction zero (0) degree which is emitted from the light source 12 as the reproducing light is rotated its polarization direction ninety (90) degrees in response to the orientation direction of the liquid crystal molecule of the liquid crystal element 52 when the liquid crystal element 52 is in OFF state. This linear polarized light (polarization direction ninety (90) degrees) is defined as the first linear polarized light as the first embodiment. On the other hand the reproducing light which is emitted from the light source 12, passes through the liquid crystal element 52 without being its polarization direction rotated because the liquid crystal molecule of the liquid crystal element 52 is orientated in the optical axis direction when the liquid crystal element 52 is in ON state. The linear polarized light (polarization direction zero (0) degree) which has the same polarization direction as the linear polarized light which is emitted from the light source 12, is defined as the second linear polarized light as the first embodiment.

That is, in a case of the multivalued information reproducing apparatus 51 according to the third embodiment, the light which is input to the optical recording medium 1 via the objective lens 19, can be switched to the first linear polarized light and the second linear polarized light that are orthogonal with each other by ON and OFF control of the liquid crystal element 52 in the first optical system.

By this arrangement, the fluorescent light which is generated when the reproducing light is irradiated onto the optical recording medium 1 and which is directed to the photo detector 23 via the optical filter 100 and the condenser lens 21, can be the first fluorescent light (the fluorescent light which is generated when the first linear polarized light is irradiated onto the optical recording medium 1) and the second fluorescent light (the fluorescent light which is generated when the second linear polarized light is irradiated onto the optical recording medium 1) that are changed alternatively by ON and OFF control of the liquid crystal element 52. As a result, it becomes possible to obtain amount of light of the first fluorescent light and the second fluorescent light by the photo detector 23 in a separated state by performing ON or OFF of the liquid crystal element 52 at a prescribed timing when reading of the polarization direction which is recorded as the multivalued information is performed.

In this case it becomes possible for the judging portion 24 to perform judgment of the polarization direction which is recorded in the optical recording medium 1 as a similar manner as the first embodiment by the calculating process based on the respective amount of light which are obtained by the photo detector 23 for the respective polarized light for cases the liquid crystal element 52 is in the ON state and OFF state. By these steps, reproducing of the optical recording medium 1 on which the polarization direction is recorded as the multivalued information becomes possible.

At this point, in case of this embodiment a structure is employed in that the liquid crystal element 52 is arranged in the first optical system, so the first linear polarized light and the second linear polarized light are generated with a time interval using the linear polarized light which is emitted from the light source 12. However, the present invention is not intended to be limited to this embodiment, and various modifications can be introduced within a range which does not depart from the object of the present invention. That is, it is no problem that a structure is employed in that a half wavelength plate which is set up rotatably is arranged instead of the liquid crystal element 52 depending on the cases. However, in such a case there is a possibility that reproducing speed is limited, and it is preferable that the liquid crystal element 52 is arranged as the present embodiment.

### [Others]

In the all three embodiments described above, an multivalued information reproducing apparatuses which have a structure in that the first optical system and the second optical system are disposed to sandwich the optical recording medium 1 are shown. However, the present invention is not intended to be limited to these embodiments. That is, it is of course no problem that the apparatus has a structure in that, for example, a reflecting layer is set up between the substrate 2 and the recording layer 3 of the optical recording medium 1, and the multivalued information is reproduced using the fluorescent light that is reflected by the reflecting layer.

Fig. 9 is a schematic diagram to show a multivalued information reproducing apparatus which reproduces the multivalued information of the optical recording medium in that the above described reflecting layer is disposed. The apparatus is a modification of the multivalued information reproducing apparatus 51 according to the third embodiment. As shown in Fig. 9, the fluorescent light which is reflected by the reflecting layer can be directed to the photo detector 23 by arranging a beam splitter 54 in an optical path. In case of this structure, the beam splitter 54 and the objective lens 19 are common optical members of the first optical system and the second optical system.

In the embodiments described above, the multivalued information reproducing method and the multivalued information reproducing apparatus are shown which are applied to the method in that the multivalued information is reproduced using the fluorescent light which is generated when the reproducing light is irradiated onto the optical recording medium. However, the present invention is not intended to be limited to these embodiments, and the present invention can be widely applied to a method in that the multivalued information is reproduced using emission light which is generated when the reproducing light is irradiated onto the optical recording medium. For example, the present invention can be applied to a case where phosphorescence or the like is used except the fluorescent light. However, when the phosphorescence is used, because the life time of the phosphorescent light is long, it is not suitable for high speed reading and the fluorescent light is preferable to perform the high speed reading.

By the multivalued information reproducing method or the multivalued information reproducing apparatus in accordance with the present invention, reproducing of the multivalued information becomes possible without utilizing the expensive optical members for the optical recording medium in which the polarization direction of the recording light is recorded as the multivalued information and the multivalued information is reproduced using emission light which is generated when the reproducing light is irradiated. As a result, the present invention is useful as a multivalued information reproducing method and a multivalued information reproducing apparatus.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A multivalued information reproducing apparatus comprising:
a light source which emits linear polarized light having a prescribed polarization direction;
a first optical system which generates first linear polarized light and second linear polarized light that have different polarization directions using the linear polarized light which is emitted from the light source and makes the two polarized lights input to an optical recording medium in which the polarization directions of recording light are recorded as multivalued information;
a second optical system which has a transmission light selecting element that selectively transmits emission light generated when the light passes the first optical system is input to the optical recording medium and by which the emission light that passes the transmission light selecting element is directed to a photo detecting portion in a state where first emission light that has a same polarization direction as the first linear polarized light and second emission light that has a same polarization direction as the second linear polarized light are separated; and
a polarization direction judging portion which judges the polarization direction that is recorded in the optical recording medium based on amount of light of the first emission light and amount of light of the second emission light that are obtained by the photo detecting portion.

2. The multivalued information reproducing apparatus according to claim 1, **characterized in that** the first optical system makes the first linear polarized light and the second linear polarized light input simultaneously to the optical recording medium.

3. The multivalued information reproducing apparatus according to claim 1 or 2, **characterized in that** the first optical system includes:
a first light separating element which separates the linear polarized light that is emitted from the light source into two lights;
a polarization direction converting element which is arranged so as to convert the polarization direction of at least one of the two lights that are separated by the first light separating element and to make one of the two lights be the first linear polarized light and the other of the two lights be the second linear polarized light;
an optical axis aligning element which aligns the optical axes of the first linear polarized light and the second linear polarized light; and
a light shielding element which is arranged in front of the optical axis aligning element to shield a part of the respective lights such that the first linear polarized light and the second linear polarized light are not superimposed when the optical axes of them are aligned.

4. The multivalued information reproducing apparatus according to at least one of claims 1-3, **characterized in that** the second optical system includes a second light separating element which separates the first emission light and the second emission light into different light paths, and the photo detecting portion is composed of two photo detectors that are arranged in different positions.

5. The multivalued information reproducing apparatus according to at least one of claims 1-3, **characterized in that** the second optical system directs the first emission light and the second emission light to the photo detecting portion with a time interval.

6. The multivalued information reproducing apparatus according to claim 5, **characterized in that** the second optical system includes a liquid crystal element which contains a liquid crystal and two transparent electrodes to sandwich the liquid crystal, and a polarizing plate.

7. The multivalued information reproducing apparatus according to claim 1, **characterized in that** the first optical system makes the first linear polarized light and the second linear polarized light input to the optical recording medium with a time interval.

8. The multivalued information reproducing apparatus according to claim 7, **characterized in that** the first optical system includes a liquid crystal element which contains a liquid crystal and two transparent electrodes to sandwich the liquid crystal.

9. The multivalued information reproducing apparatus according to any one of claim 1 to claim 8, **characterized in that** the first linear polarized light and the second linear polarized light have the polarization directions that are orthogonal with each other.

10. A multivalued information reproducing method to reproduce an optical recording medium on which multivalued information is recorded, comprising:
a first step to irradiate simultaneously or with a time interval first linear polarized light and second linear polarized light which have different polarization directions on the optical recording medium in which the polarization directions of recording light are recorded as multivalued information;
a second step to extract only emission light which is generated from the optical recording medium by the irradiation of the first step;
a third step to direct the emission light that is extracted by the second step to a photo detecting portion in a state where first emission light that has a same polarization direction as the first linear polarized light and second emission light that has a same polarization direction as the second linear polarized light are separated; and
a fourth step to judge the polarization direction that is recorded in the optical recording medium based on amount of light of the first emission light and amount of light of the second emission light that are obtained in the photo detecting portion by the third step.
